(19) Europäisches Patentamt
European Patent Office
Office européen des brevets

(11) Veröffentlichungsnummer : **0 355 507 B1**

(12) **EUROPÄISCHE PATENTSCHRIFT**

(45) Veröffentlichungstag der Patentschrift :
**11.11.92 Patentblatt 92/46**

(51) Int. Cl.$^5$ : **C04B 28/32,** // (C04B28/32, 18:04)

(21) Anmeldenummer : **89114281.2**

(22) Anmeldetag : **02.08.89**

(54) **Verfahren zum Verfestigen von Abwasserkonzentraten.**

(30) Priorität : **17.08.88 DE 3827958**

(43) Veröffentlichungstag der Anmeldung :
**28.02.90 Patentblatt 90/09**

(45) Bekanntmachung des Hinweises auf die
Patenterteilung :
**11.11.92 Patentblatt 92/46**

(84) Benannte Vertragsstaaten :
**AT BE CH DE ES FR GR IT LI NL SE**

(56) Entgegenhaltungen :
**DE-A- 2 816 102**
**FR-A- 952 896**
**CHEMICAL ABSTRACTS, Band 100, Nr. 8, Februar 1984, Seite 272, Zusammenfassung 55983m, Columbus, Ohio, US; P. ZHU et al.: "Useof waste magnesium chloride liquor obtained from treatment of ascharite-preparation of magnesia cement-based composites", HUAXUESHIJIE 1982, 23(5), 152-4**
**CHEMICAL ABSTRACTS, Band 100, Nr. 24, Juni 1984, Seite 309, Zusammenfassung Nr. 196911y, Columbus, Ohio, US; & JP-A-59 18147 (NIHON CEMENT CO., LTD) 30-01-1984**
**CHEMICAL ABSTRACTS, Band 99, Nr. 26, Dezember 1983, Seite 317, Zusammenfassung Nr. 217556q, Columbus, Ohio, US; S.P. SIVKO-Vet al.: "Modified magnesian cements", & TR.-MOSK. KHIM.-TEKHNOL. INST. IM. D.I. MENDELEEVA 1982, 123, 85-8**
**CHEMICAL ABSTRACTS, Band 103, Nr. 4, Juli 1985, Seite 239, Zusammenfassung Nr. 26303w, Columbus, Ohio, US; V.I. SAI et al.:"Technical cement from by-products", & STROIT. MATER. KONSTR. 1985, (1), 28-9**
**CHEMICAL ABSTRACTS, Band 107, Nr. 12, September 1987, Seite 324, Zusammenfassung Nr. 101708v, Columbus, Ohio, US; &JP-A-61 286 257 (HARIMA REFRACTORIES CO., LTD) 16-12-1986**

(56) Entgegenhaltungen :
**CHEMICAL ABSTRACTS, Band 96, Nr. 12, Juni 1982, Seite 313, Zusammenfassung Nr. 204482a, Columbus, Ohio, US; E. CZERNIAWS-KA:"Adaptation of magnesium materials for salt mines", & PR. INST. - INST. PRZEM. WIAZACYCH MATER. BUDOW. OPOLU 1981, (1), 10PP.**
**Nouveau Traité de Chimie Minérale, 1958, Tome IV p 177 et 365**

(73) Patentinhaber : **SIEMENS AKTIENGESELLSCHAFT Wittelsbacherplatz 2 W-8000 München 2 (DE)**

(72) Erfinder : **Netter, Werner, Dipl.-Ing. Kärtnerstrasse 8 W-8522 Herzogenaurach (DE)**
Erfinder : **Bege, Dietmar Schwalbenweg 10 W-8520 Erlangen (DE)**
Erfinder : **Pörner, Martin, Dipl.-Ing. (FH) Kuhnhofer Weg 44 W-8560 Lauf (DE)**
Erfinder : **Gräbener, Karl-Heinz, Dipl.-Ing. Hirtenwiese 4 W-8755 Alzenau (DE)**

**Beschreibung**

Die Erfindung betrifft ein Verfahren zum Verfestigen von Abwasserkonzentrat, das mindestens ein Magnesiumsalz enthält.

In vielen Fällen dürfen Abwässer nicht direkt in Oberflächengewässer, wie Flüsse eingeleitet werden. Es ist daher üblich, Abwässer zu reinigen. Eine Reinigung ist aber dann nicht oder nur mit großem Aufwand durchführbar, falls in den zu beseitigen Abwässern in hohem Maße Salze gelöst sind. Auch, falls die Abwässer radioaktive Stoffe enthalten, ist eine Reinigung sehr aufwendig.

Derartige Abwässer werden Verdampferanlagen zugeleitet. Dort entweicht unschädlicher Wasserdampf. Die verbleibenden Konzentrate werden dann verfestigt und als Sondermüll auf eine geeignete Deponie gebracht. Es ist bekannt, zur Verfestigung die Konzentrate mit Zement zu vermischen.

Die verfestigten Konzentrate werden beispielsweise in Salzstöcken gelagert. Die Lagerungstemperatur beträgt dort bis zu 60°C. Vom verfestigten Konzentrat wird also gefordert, daß es bei Umgebungsbedingungen, die beispielsweise in Salzstöcken vorherrschen, nicht erweicht, kein Wasser absondert und auch nicht in einen fließfähigen Zustand übergeht.

Es wurde festgestellt, daß mit steigendem Magnesiumgehalt im Konzentrat die durch Verfestigung mit Zement gebildeten Körper zunehmend instabiler sind. Solche Gebinde aus magnesiumhaltigem Konzentrat und Zement erweichen sehr schnell bei Umgebungsbedingungen, die in geeigneten Deponien, beispielsweise in Salzstöcken, vorherrschen.

Zur Verfestigung von magnesiumhaltigen Konzentraten ist daher ein höherer Zementanteil notwendig als bei magnesiumfreien oder nur wenig Magnesium enthaltenden Konzentraten.

Konzentrate aus Abwässern einer Rauchgasentschwefelungsanlage weisen eine so hohe Magnesiumkonzentration auf, daß das Konzentrat zu gleichen Teilen mit Zement vermischt werden muß, um ein stabiles Gebinde zu erzielen. Erst dann ist gewährleistet, daß das Gebinde in einer Deponie in Form und Zusammensetzung unverändert bleibt.

Die Verwendung eines so hohen Zementanteiles bringt aber Nachteile mit sich. Selbst mit maschinellen Hilfsmitteln ist eine homogene Vermischung von Konzentrat und Zement dann nur noch schwer durchführbar. Auch das Abfüllen der Mischung und das Formen von Endlagergebinden ist sehr aufwendig. Das ist darauf zurückzuführen, daß während des Mischvorganges das Konzentrat mit der hohen Zementbeimischung ein zähes, klebriges Produkt bildet. Darüber hinaus fällt wegen des notwendigen hohen Zementanteiles ein sehr großes Abfallvolumen an, das dem Endlager zugeführt werden muß. Es muß also eine große Lagerkapazität zur Verfügung gestellt werden. Schließlich steigen die Kosten für die Beseitigung der Abwässer mit der benötigten Zementmenge.

Aus "Chemical Abstracts, Band 100, Nr. 8, Februar 1984, Seite 272, Zusammenfassung Nr. 55983 m" ist bekannt, Abwasser, das ein Magnesiumsalz enthält, dadurch zu verfestigen, daß nur Magnesiumoxid beigemischt wird.

Das Oxid bildet mit in den Abwasserkonzentraten gelösten Magnesiumsalzen, beispielsweise mit Magnesiumchlorid oder mit Magnesiumsulfat, einen Mischkristall, der Wasser aufnimmt und schnell fest wird.

Durch das teilweise oder sogar vollständige Ersetzen des Zementes durch Magnesiumoxid wird weit weniger Bindemittel als bisher benötigt, um ein Gebinde herzustellen, das beispielsweise auch bei 60°C stets fest bleibt. Aufgrund der Reduktion des Bindemittelanteiles bleibt während des gesamten Mischprozesses die Mischung aus Abwasserkonzentrat und Bindemittel weitgehend flüssig und ist somit leicht zu vermischen. Aufwendige Mischapparaturen sind nicht erforderlich. Trotzdem wird eine stets homogene Vermischung erzielt. Wegen der geringen Bindemittelzumischung ist auch das endzulagernde Volumen gering, so daß ein kleines Endlager ausreicht. Mit dem Einsatz von Magnesiumoxid als Bindemittel statt der ausschließlichen Verwendung von Zement erfolgt die Herstellung eines Gebindes einfacher, schneller und kostengünstiger und das hergestellte Gebinde ist stabiler, widerstandsfähiger und kleiner.

Da bei Verwendung von Magnesiumoxid während des Mischvorganges statt eines zähen, klebrigen Stoffes ein weitgehend flüssiger Stoff vorliegt, kommt man mit hinsichtlich Anschaffung und Betrieb kostengünstigen Mischapparaturen aus.

Falls den Abwasserkonzentraten ausschließlich Magnesiumoxid zugemischt wird, bleibt die Substanz während des Mischvorganges vollstandig flüssig. Darüber hinaus ist die für eine bestimmte Konzentratmenge benötigte Bindemittelmenge bei Verwendung von Magnesiumoxid nur halb so groß als bei Verwendung von Zement.

In einem Versuch wurde ein Konzentrat verfestigt, das beispielsweise aus dem Abwasser einer Rauchgasentschwefelungsanlage gebildet sein kann. Dieses Konzentrat bestand aus 28,6 % $CaCl_2$, 14,7 % $MgCl_2$, 3,5 % NaCl, 5,2 % $CaSO_4 \cdot 2H_2O$ und 48 % $H_2O$. Um ein Gebinde zu erhalten, das auch bei 60°C fest bleibt, mußten zu 1000 g dieses Konzentrates 960 g Zement als Bindemittel zugemischt werden. Bei Verwendung von Magnesiumoxid als Bindemittel reichten, um ein auch bei 60°C festes Gebinde zu bekommen, 480 g Magnesiumoxid für 1000 g Konzentrat aus.

Bei Verwendung von ausschließlich Magnesiumoxid als Bindemittel ist der Mischvorgang besonders einfach durchführbar und man erzielt die gewünschte Festigkeit des Gebindes schon mit sehr wenig Bindemittel, so daß das in ein Endlager einzubringende Volumen sehr klein ist.

Obwohl bei der Verwendung von Magnesiumoxid als Bindemittel im Vergleich zur Verwendung von Zement nur eine Bindemittelmenge benötigt wird, die ungefähr halb so groß ist, verursacht die laufende Bereitstellung von Magnesiumoxid doch erhebliche Kosten.

Der Erfindung lag die Aufgabe zugrunde, ein Verfahren zum Verfestigen von Abwasserkonzentrat zu entwickeln, das selbst bei hohem Magnesiumgehalt im Konzentrat mit geringem Materialeinsatz und mit kostengünstigem Material schnell, leicht und kostengünstig durchführbar ist und trotzdem ein stabiles, endlagerfähiges Gebinde liefert.

Die Aufgabe wird gemäß der Erfindung dadurch gelöst, daß dem Abwasserkonzentrat als Bindemittel gebranntes Dolomitgestein zugemischt wird, das teilweise aus Magnesiumoxid besteht.

Dolomitgestein besteht aus Calziumkarbonat und Magnesiumkarbonat. Gebranntes Dolomitgestein besteht daher aus Calciumoxid und Magnesiumoxid.

Mit der Verwendung von Dolomitgestein, das kostengünstig erhältlich ist, wird der Vorteil erzielt, daß die Kosten für die Beseitigung der Konzentrate deutlich niedriger sind als bei der Verwendung von käuflichem Magnesiumoxid, und daß die Verfestigung mit besserem Ergebnis leichter durchführbar ist als bei der ausschließlichen Verwendung von Zement als Bindemittel.

Das Verfahren nach der Erfindung zum Verfestigen von Abwasserkonzentraten, die mindestens ein Magnesiumsalz enthalten, wird beispielsweise eingesetzt zum Verfestigen von Konzentraten aus in einer Rauchgasentschwefelungsanlage angefallenen Abwässern. Diese Abwässer enthalten Magnesiumsalze, beispielsweise Magnesiumchlorid. Die immer noch große Anzahl von fossilbefeuerten Kraftwerken führt dazu, daß Abwässer von Rauchgasentschwefelungsanlagen in großer Menge anfallen. Mit dem Verfahren nach der Erfindung wird ein technisch einfaches und kostengünstiges Entsorgungsverfahren ermöglicht, das wenig Endlagerkapazität erfordert.

Das Vermischen von gebranntem Dolomitgestein mit Konzentraten ist in bekannten Mischvorrichtungen durchführbar, wie sie auch zum Herstellen von Mischungen aus Konzentraten und Zement verwendet werden. Beispielsweise werden ein als solcher bekannter Infaßmischer oder eine ebenfalls als solche bekannte Durchlaufmischanlage eingesetzt.

Eine spezielle Anlage zum Durchführen des Verfahrens nach der Erfindung zum Verfestigen von Abwasserkonzentraten, die mindestens ein Magnesiumsalz enthalten, ist also nicht erforderlich. Da während des Mischvorganges die Substanz beim Verfahren nach der Erfindung statt zäh und klebrig weitgehend flüssig ist, benötigen aber die eingesetzten Mischanlagen weniger starke Antriebsmotoren, was zu zusätzlichen Kosteneinsparungen führt.

Mit dem Verfahren nach der Erfindung, das den Einsatz von gebranntem Dolomitgestein, das Magnesiumoxid enthält, als Bindemittel vorsieht, wird insbesondere der Vorteil erzielt, daß die Kosten und der Bindemittelbedarf gering sind und damit auch das zu lagernde Abfallvolumen und die Endlagerkosten klein sind. Darüber hinaus sind die zu lagernden Gebinde auch bei hohen Lagertemperaturen, die beispielsweise 60°C betragen, stabil. Bei Magnesiumoxidgebinden kommt es nicht zu einem partiellen Aufschmelzen, was bei Zementgebinden möglich ist. Magnesiumoxidgebinde verhalten sich wie ein monolithischer Block.

## Patentansprüche

1. Verfahren zum Verfestigen von Abwasserkonzentrat, das mindestens ein Magnesiumsalz enthält, **dadurch gekennzeichnet,** daß dem Abwasserkonzentrat als Bindemittel gebranntes Dolomitgestein zugemischt wird, das teilweise aus Magnesiumoxid besteht.

2. Verfahren nach Anspruch 1, **gekennzeichnet** durch die Verwendung zum Verfestigen von Konzentrat aus in einer Rauchgasentschwefelungsanlage angefallenem Abwasser.

3. Verfahren nach einem der Ansprüche 1 oder 2, **dadurch gekennzeichnet,** daß das Zumischen in einem Infaßmischer erfolgt.

4. Verfahren nach einem der Ansprüche 1 oder 2, **dadurch gekennzeichnet,** daß das Zumischen in einer Durchlaufmischanlage erfolgt.

## Claims

1. Process for the solidification of effluent concentrate which contains at least one magnesium salt, characterised in that calcined dolomite rock partly comprising magnesium dioxide is mixed with the effluent concentrate as a binding agent.

2. Process according to claim 1, characterised by its use in the solidification of concentrate from effluent accumulating in an exhaust gas desulphurisation plant.

3. Process according to one of claims 1 or 2, characterised in that the admixture is effected in an indrum mixer.

4. Process according to one of claims 1 or 2, characterised in that the admixture is effected in a continuous mixer device.

## Revendications

1. Procédé de solidification d'un concentré d'eaux usées, contenant au moins un sel de magnésium, caractérisé en ce qu'il consiste à mélanger au concentré d'eaux usées de la roche de dolomite calcinée, qui sert d'agent liant et qui est constituée en partie d'oxyde de magnésium.

2. Procédé suivant la revendication 1, caractérisé par l'utilisation pour la solidification d'un concentré provenant d'eaux usées se produisant dans une installation de désulfuration des gaz de fumée.

3. Procédé suivant la revendication 1 ou 2, caractérisé en ce qu'il consiste à effectuer le mélange dans un mélangeur à fût.

4. Procédé suivant la revendication 1 ou 2, caractérisé en ce qu'il consiste à effectuer le mélange dans une installation de mélange en continu.